# EUROPEAN PATENT SPECIFICATION

(11) **EP 3 400 554 B1**
(45) Date of publication and mention of the grant of the patent: **14.10.2020**
(21) Application number: 16826604.7
(22) Date of filing: 27.12.2016
(51) Int. Cl.: G06K 7/10, G09G 3/00

(54) **INTEGRATION OF A BARCODE SCANNER INTO A DISPLAY DEVICE**
INTEGRATION EINES BARCODESCANNERS IN EINE ANZEIGEVORRICHTUNG
INTÉGRATION D'UN DISPOSITIF DE BALAYAGE DE CODE À BARRES DANS UN DISPOSITIF D'AFFICHAGE

(30) Priority: 06.01.2016 US 201662275519 P; 29.03.2016 GB 201605241
(43) Date of publication of application: 14.11.2018
(73) Proprietor: Cubic Corporation, San Diego, CA 92123 (US)
(72) Inventor: PILCHER, Neil, Smallfield Surrey RH6 9NT (GB); VILHELMSEN, Tom, 4300 Holbaek (DK); SISEMAN, John, Horley Surrey RH6 7HZ (GB)
(74) Representative: Gill Jennings & Every LLP
(86) International application number: PCT/US2016/068640
(87) International publication number: WO 2017/120071

(56) References cited:
- EP-A1- 2 645 072
- US-A1- 2002 050 523
- US-A1- 2005 167 506
- US-A1- 2007 063 134

## Description

### FIELD OF THE INVENTION

The present invention is generally directed to a display device with an integrated barcode reading capability, although applications may not be so limited.

### BACKGROUND OF THE INVENTION

Current fare collection devices have their own dedicated landing plane for barcodes and require the user to hold the barcode media on a dedicated area that is separate from a display providing messages, instructions, and other information to the user. In some circumstances this causes user confusion and uncertainty about where to present fare payment media to be read properly. In other circumstances the scarcity of real estate at fare collection locations makes it difficult to incorporate both a display and a barcode landing plane for easy use by customers.

US 2007/063134 A1 discloses a display with compensated light source drive, and EP2645072 A1 discloses an integrated scanner, scale, and touchscreen display

### BRIEF SUMMARY OF THE INVENTION

One aspect of the present invention is a display device for fare collection having integrated barcode scanning. This has a display configured to display dynamic messages and a first glass layer displaced from the display. It also has a transreflective glass layer positioned between the first glass layer and the display, and displaced from the first glass layer. The device includes a scanner positioned such that it: emits light rays reflected by the transreflective glass layer thru the first glass layer and detects light rays reflected by the transreflective glass layer from the first class layer. The device also has a processor capable of decoding a barcode scanned by the scanner to determine a proper fare. As an addition to this, a reflector can be used to reflect light rays from the transreflective glass layer to the scanner. And a further addition to this is an RFID card reader with the processor able to decode the RFID signal.

Another aspect of the present invention is a method of fare collection using a display device having integrated barcode scanning. This method includes displaying a message on the display device to present a fare media and indicating on a first glass layer of the display device where to present the fare media. Other steps include detecting the fare media placed on or within a threshold distance of the first glass layer of the display device and scanning the fare media placed on or within a threshold distance of the display device by a scanner placed in position to detect light rays reflected off of a transreflective glass layer displaced from the first glass layer. And further steps include decoding, using a processor, the fare media barcode, determining the fare media represents the proper fare; and indicating that the fare media is proper.

Further areas of applicability of the present disclosure will become apparent from the detailed description provided hereinafter. It should be understood that the detailed description and specific examples, while indicating various embodiments, are intended for purposes of illustration only and are not intended to necessarily limit the scope of the disclosure.

### BRIEF DESCRIPTION OF THE DRAWINGS

FIG. 1A shows an embodiment of a simplified overhead diagram of an integrated display device showing layers of glass, transreflective glass, and a reflector.
FIG. 1B shows an embodiment of a simplified overhead diagram of an integrated display device of FIG. 1A with the placement of the scanner in a position that does not require a reflector.
FIG. 2 shows an embodiment of a display device in a fare collection housing.
FIG. 3 depicts an embodiment of a fare collection display device at a gated entry.
FIG. 4 depicts an embodiment of a fare collection display device on a bus.
FIG. 5 depicts a flowchart of one embodiment of the operation of the fare collection display device.
FIG. 6 shows an embodiment of a processing system of the fare collection dispaly device.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION OF THE INVENTION

The ensuing description provides preferred exemplary embodiment(s) only, and is not intended to limit the scope, applicability or configuration of the disclosure. Rather, the ensuing description of the preferred exemplary embodiment(s) will provide those skilled in the art with an enabling description for implementing a preferred exemplary embodiment. It being understood that various changes may be made in the function and arrangement of elements without departing from the scope as set forth in the appended claims.

Embodiments of the present invention, incorporate features so that a display surface is configured as the landing plane for barcode media. Embodiments of the present invention also incorporate one or more features that enable its unique functionality. These features include the use of a transreflective glass on top of the display that allows the display lighting to appear through this transreflective glass (transmissive part) and also allows the barcode scanning beams to reflect from the reflective surface (reflective part). Other embodiments may use different components that provide substantially similar functions to provide similar results.

Barcodes as referred to herein are any type of code or encoding technique including but not limited to single and multidimensional coding such as UPC, EAN, Code 39, Code 128, ITF (2 of 5), Code 93, CodaBar, GS1 DataBar, MSI Plessey, QR, Datamatrix, PDF417, and Aztec codes.

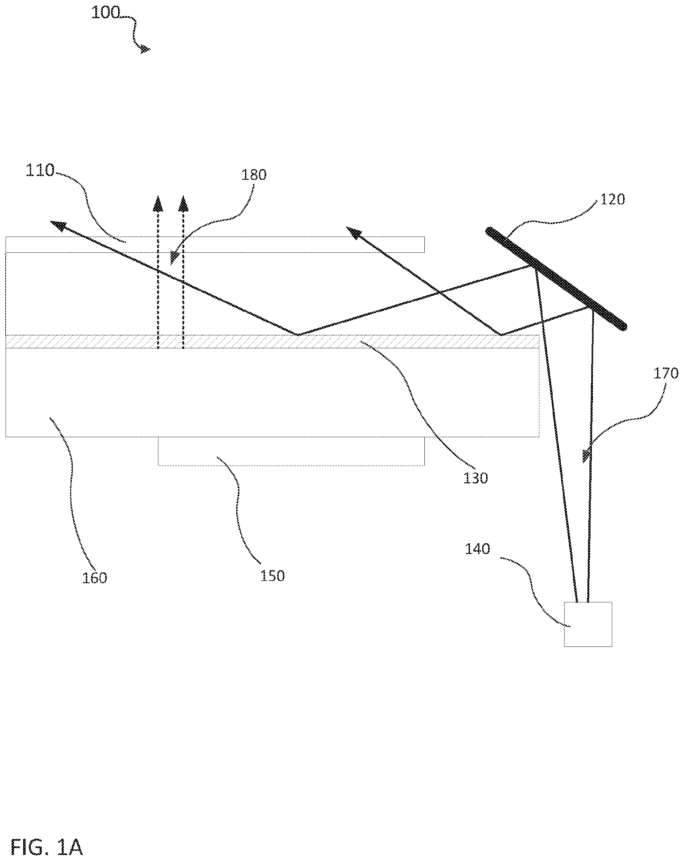

An overhead view of an embodiment of a barcode reader integrated into a display device is illustrated in **FIG. 1A****.** Mounted on top of display 160 is a transreflective glass layer 130. The transreflective glass layer 130 has unique properties that allow it to both reflect light rays 170 on one side of it and transmit a second set of light rays 180 from the display 160 through the other side of transreflective glass layer 130. This enables the scanner 140 to emit light rays 170 that reach glass layer 110 after reflecting off of the reflector 120 and the transreflective glass layer 130. It also enables the display 160 to emit the second set of light rays 180 that reach glass layer 110 by passing through transreflective glass layer 130 to provide back lighting that enables the user to read the display 160 output. Thus the display device 100 can operate as both a display and a barcode reader. The transreflective glass layer 130 can be made in many ways that one of skill in the art should readily understand including silvering and by layering different materials including polycarbonates on glass.

Glass layer 110 can be touch sensitive in some embodiments. In one embodiment glass layer 110 can be a resistive touchscreen. Resistive touchscreens generally use an upper layer of conducting material bonded to a lower layer of conducting glass that are separated by an insulating membrane. When the upper layer is pressed a circuit is completed. In another embodiment glass layer 110 can be a capacitive touchscreen. Capacitive touchscreens generally use at least three layers of glass where the inner layer serves as an insulator and the outer layer are conductors. In another embodiment glass layer 110 can be a surface acoustic wave touchscreen. In this embodiment ultrasonic waves are reflected back and forth across the surface of glass layer 110. When the screen is touched, the sound beams are interrupted and absorbed. In yet another embodiment glass layer 110 can be a near field imaging touchscreen. In this embodiment small voltage amounts are applied at the corners of the touchscreen creating an electromagnetic field on the surface of the touchscreen. The electromagnetic field is altered when the touchscreen is touched. A processor determines the significance of the area of the touchscreen pressed in all cases. In some embodiments glass layer 110 is designed to be capable of resisting vandalism using reinforced glass, polycarbonate glazing, or any other method.

Displaced a certain distance from the transreflective glass layer 130 is glass layer 110. In one embodiment that distance can be 15 mm. In other embodiments the distance can be more or less than 15 mm. Glass layer 110 can be the landing plane for printed barcodes and devices displaying barcodes that can be placed directly on glass layer 110 or held a threshold distance from glass layer 110. In one embodiment the threshold distance can up to 15 mm, while in other embodiments the threshold distance can be more than that. In some embodiments the locations on glass layer 110 for placing barcodes and devices displaying barcodes can be permanently marked on glass layer 110 using various techniques including silk screening. Glass layer 110 may not be as wide as the display 160 or the transreflective glass layer 130. In some embodiments, this can allow a reflector 120 to be positioned at an angle to direct light and signals from behind the display 160 to the glass layer 110.

A scanner 140 can scan the barcode presented on the glass layer 110 by normal barcode scanning methods that one of skill in the art can appreciate. These methods include LED scanning and camera or other imaging scanning techniques. LED scanners work by directing a beam of light across the barcode, measuring the amount of light reflected back, converting the light first to energy and then into digital data. Image scanners typically use a video camera to capture the image of the bar code and sophisticated digital image processing to decode it. The scanner 140 may be displaced behind the display or be placed in another location, but in a position such that it can emit light rays 170 that can be reflected by reflector 120 and the transreflective glass layer 130 to the barcode placed on or within a threshold distance of glass layer 110. The scanner 140 can also detect the light rays reflected back to it from reflector 120 and transreflective glass layer 130 as part of the process to detect the barcode placed on or within a threshold distance of the glass layer 110.

Reflector 120 can be positioned so as to reflect light from the scanner 140 to the transreflective glass layer 130 and through the glass layer 110 at the locations designated for the different types of barcodes to be placed. Reflector 120 can be voltage controlled so that it is reflective when voltage is applied or non-reflective when it is not. Reflector 120 can also be moveable so that it can be rotated out of the reflecting range when the display is used and rotated into reflection range when the barcode scanning is desired. It may be desirable in some embodiments for reflector 120 to be flat, concave, or convex shaped to properly reflect light from scanner 140 to the appropriate portions of glass layer 110. Reflector 120 can be a standard reflector, motorized reflector, or other type. Reflector 120 can be made by applying a reflective coating to a suitable surface in some embodiments. In some embodiments the reflector 120 can be made by applying silver and/or aluminum coatings to a class surface. In other embodiments reflector 120 may be made from a highly polished metal material. There are many ways to make reflectors known to those skilled in the art that could be used in other embodiments.

RFID reader can be part of display device 100 and can be attached to display 160. RFID technology has two components - the RFID reader 150 and a smartcard (or other device) with RFID chip. The RFID reader 150 has a transceiver that generates a weak radio signal that may have a range from a few inches to a few feet. The signal is necessary to activate the chip in the smartcard and is transmitted through an antenna on RFID reader 150. The signal itself is also form of energy that can be used to power the chip in the smartcard. The transponder is the part of the RFID chip (inside the smartcard) that converts that radio frequency into usable power, as well as sends and receives messages and is activated by a signal from the RFID reader 150. Upon activation the transponder transmits the information it has stored to the transceiver in the RFID reader 150.

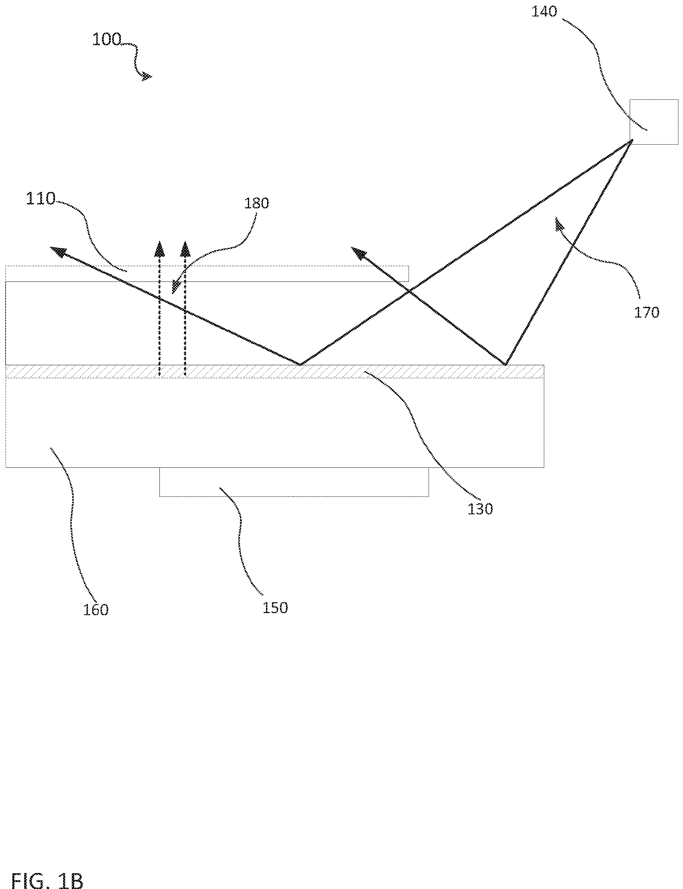

**FIG. 1B** shows an embodiment of a simplified overhead diagram of the integrated display device of FiG. 1A with the placement of the scanner 140 in a position that does not require a reflector 120. The scanner 140 may be placed above or to the side of display 160, but in a position such that it can emit light rays 170 that can be reflected by the transreflective glass layer 130 to the barcode placed on or within a threshold distance of the glass layer 110. The scanner 140 can also detect the light rayss reflected back to transreflective glass layer 130 as part of the process to detect the barcode placed on or within a threshold distance of the glass layer 110.

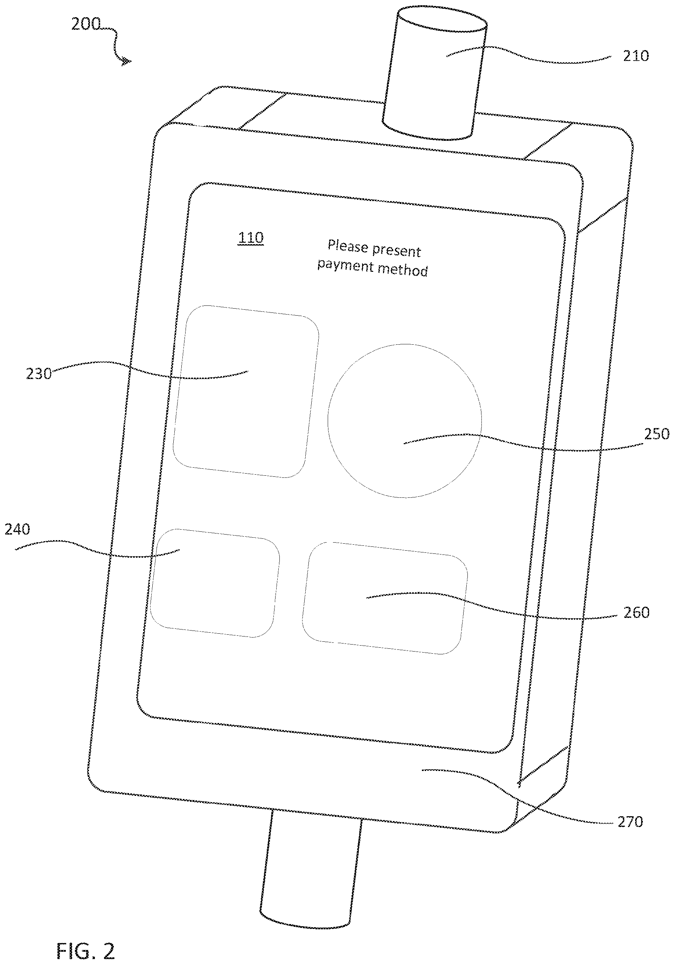

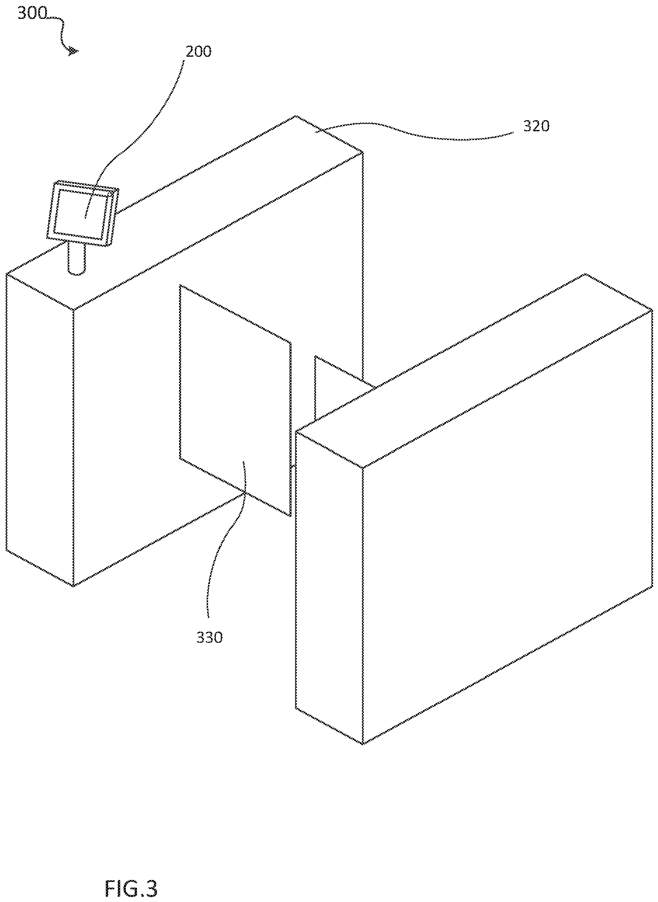

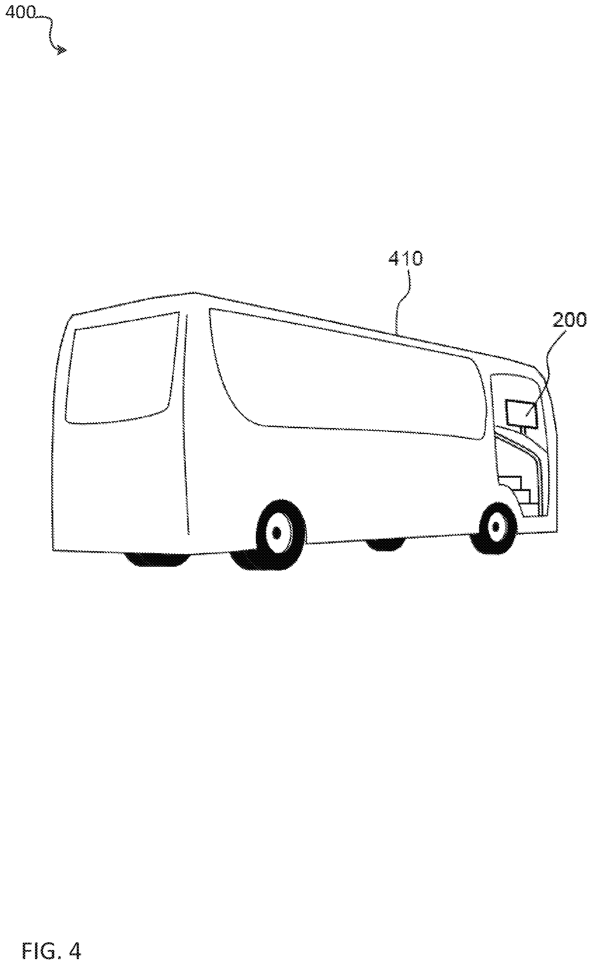

**FIG. 2** depicts the fare collection device 200 with display device 100 inside housing 270. Fare collection device 200 can be located at a an entry gate as shown in **FIG 3** with entry gate structure 320 and entry gate 330 that opens when fare or entry is approved. Such entry gate structures 320 could be located at entry points to bus terminal, train stations, ferry ports, cruise terminals, theater and other performance venues, amusement parks, attractions, museums, sporting event venues, or any other location that might require restricted entry. The fare collection device 200 could be situated before entry gate 330 somewhere on entry gate structure 320 and in such proximity to allow the entry gate 330 to open long enough for entry after scanning the fare media. Entry gate 330 can be in communication with fare collection device 200 directly, or over a network, for authorization to open entry gate 330 is passed. In some embodiments entry gate 330 can be a turnstile entry that rotates when the fare is approved. **FIG 4** depicts the fare collection device 200 in a bus 410 entry area, but this could be also be a train entry, ferry entry, or any other type of vehicle entry point. In one embodiment the fare collection device 200 notifies the bus driver of proper fare collection. In other embodiments fare collection device 200 is in communication with an entry device like a gate or turnstile (neither shown) and allows entry upon approval after scanning the fare media.

Returning to FIG. 2 that depicts an embodiment of the fare collection device 200. The display device 100 can be encapsulated by the housing 270 as shown in this embodiment. In the this embodiment, glass layer 110 is shown, and is viewable by the user. However, reflector 120, RFID reader 150, and scanner 140 are within the housing 270 and cannot be seen by the user. The display device 100 may not be centered in housing 270 (as shown) so that housing 270 can appropriately accommodate the reflector 120, the scanner 140, and the display 160 with transreflective glass layer 130 mounted to it.

In this embodiment, display device 100 can have predetermined areas 230 - 260 marked on glass layer 110 indicating where particular devices or media should be placed or held at a threshold distance away. In one embodiment that distance is up to 15 mm. In other embodiments the threshold distance is greater than 15 mm. For instance portion 230 could be the location a mobile phone device is places, portion 240 could be where a smartcard should be placed, portion 250 could be where a wearable device should be placed, and portion 260 could be where a printed barcode is placed. It can be appreciated by one of skill in the art that the portions can be allocated in many different ways on glass layer 110 to accommodate many possible devices and associated configurations. It can also be possible that the area where the portions are allocated are dictated by the the display device 100 itself. This can be due to geometric placement requirements of the scanner 140 and reflector 120 as well as the reflective properties of the particular transreflective layer 130 used in the embodiment or due to any other dictating parameters. Housing 270 can be mounted on a pole 210 or attachable in any other manner that would hold the fare collection device 200 at an entry gate structure 320 or in bus 410 or at entry points to bus terminal, train stations, ferry ports, cruise terminals, theater and other performance venues, amusement parks, attractions, museums, sporting event venues, or any other location that might require restricted entry. The display device 100 can be made to be touch sensitive to detect customer inputs using any methods including those previously discussed. Alternatively, housing 270 could have labeled buttons (not shown) or other capability for users to respond to display messages and instructions.

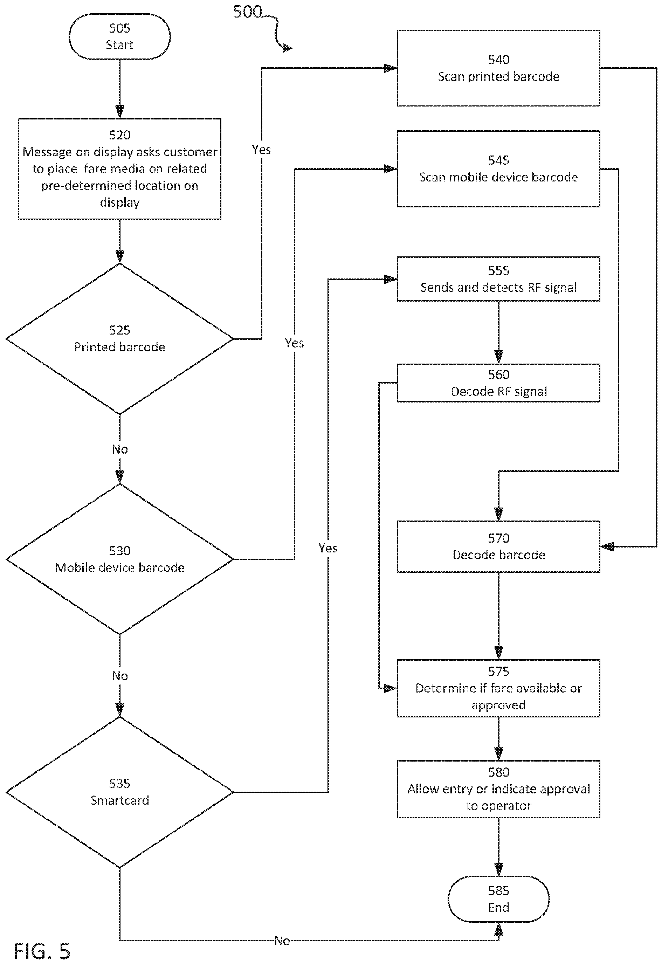

Turning now to **FIG. 5****,** the flowchart depicting one embodiment of the operation of fare collection device 200. In this embodiment the operation starts at step 505. At step 520 the display message informs the user to place their fare media on the predetermined location on the display. The operation proceeds to step 525 where it detects the printed barcode media. At 530 it detects if a mobile device barcode media is selected. At 535 it determines if a smartcard has been detected. At step 555 an RF signal is transmitted to the smartcard and the return signal from the smartcard is detected and decoded at step 560. Once the RF signal has been decoded - the operation jumps to step 575. Going back now to step 525 - if a printed barcode is detected the printed barcode is scanned at step 540. The operation proceeds to step 565 from there. Going back now to step 530 - if a mobile device barcode is detected it is scanned at step 550. The fare collection device 200 decodes the barcode at step 570. At step 575 the fare collection device 200 determines if there is fare available or credit is approved. This may be done in by detecting a proper ticket number in the scanned code and comparing it to a list of stored approved tickets numbers stored in a data base locally or at a remote location. The scanned code could also link to an account number that the fare collection device connects to or sends to a remote processing location to query such that it can be debited or determined that a credit exists. The decoding step could also determine that the presented barcode is linked to a daily, weekly, monthly, annual or other time period pass. The scanned code could also be linked to an account with a predetermined number of trips, and in that case one is debited from the account. In some embodiments the scanned code could indicate that the user is an employee with a free or reduced fare pass. One of skill in the art will understand a number of alternative schemes that could utilized to detect proper fare or a pass. At step 580 the fare collection device 200 allows entry or indicates fare approval. In this embodiment the operation ends at 585.

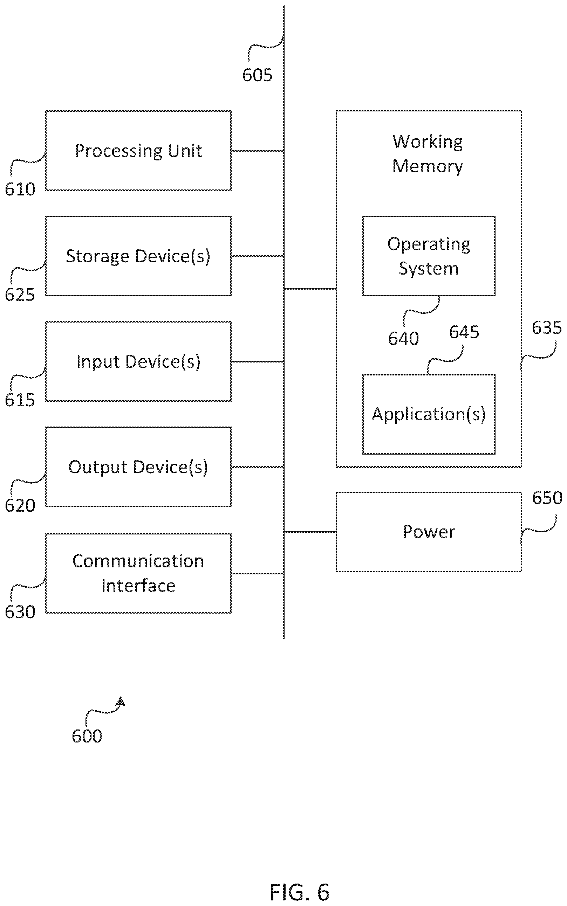

A processing system as illustrated in **FIG. 6** can represent some of the components of the fare collection device 200 system as described herein. FIG. 6 provides a schematic illustration of one embodiment of a processing system 600 that can perform the methods provided by various other embodiments, as described herein. FIG. 6 is meant only to provide a generalized illustration of various components, any or all of which may be utilized as appropriate. FIG. 6, therefore, broadly illustrates how individual system elements may be implemented in a relatively separated manner.

The processing system 600 is shown comprising hardware elements that can be electrically coupled via a bus 605 (or may otherwise be in communication, as appropriate), such as the standard communications interface. The hardware elements may include a processing unit 610, including without limitation one or more general-purpose processors and/or one or more special-purpose processors (such as digital signal processing chips, graphics acceleration processors, and/or the like); one or more input devices 615, which can include without limitation a keyboard, a touchscreen, receiver, a motion sensor, a barcode scanner, a camera, a smartcard reader, a contactless media reader, and/or the like; and one or more output devices 620, which can include without limitation a display device, a speaker, a printer, a writing module, and/or the like.

The processing system 600 may further include (and/or be in communication with) one or more non-transitory storage devices 625, which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data stores, including without limitation, various file systems, database structures, and/or the like.

The processing system 600 might also include a communication interface 630, which can include without limitation a modem, a network card (wireless or wired), an infrared communication device, a CAN (controller area network, a wireless communication device and/or chipset (such as a Bluetooth™ device, an 802.11 device, a WiFi device, a WiMax device, an NFC device, cellular communication facilities, etc.), and/or similar communication interfaces. The communication interface 630 may permit data to be exchanged with a network (such as the network described below, to name one example), other computer systems, and/or any other devices described herein. In many embodiments, the processing system 600 will further comprise a non-transitory working memory 635, which can include a RAM or ROM device, as described above.

The processing system 600 also can comprise software elements, shown as being currently located within the working memory 635, including an operating system 640, device drivers, executable libraries, and/or other code, such as one or more application programs 645, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a computer-readable storage medium, such as the storage device(s) 625 described above. In some cases, the storage medium might be incorporated within a computer system, such as computer system 600. In other embodiments, the storage medium might be separate from a computer system (e.g., a removable medium, such as a compact disc), and/or provided in an installation package, such that the storage medium can be used to program, configure and/or adapt a general purpose computer with the instructions/code stored thereon. These instructions might take the form of executable code, which is executable by the processing system 600 and/or might take the form of source and/or installable code, which, upon compilation and/or installation on the processing system 600(e.g., using any of a variety of generally available compilers, installation programs, compression/decompression utilities, etc.) then takes the form of executable code.

Substantial variations may be made in accordance with specific requirements. For example, customized hardware might also be used, and/or particular elements might be implemented in hardware, software (including portable software, such as applets, etc.), or both. Moreover, hardware and/or software components that provide certain functionality can comprise a dedicated system (having specialized components) or may be part of a more generic system. For example, a risk management engine configured to provide some or all of the features described herein relating to the risk profiling and/or distribution can comprise hardware and/or software that is specialized (e.g., an application-specific integrated circuit (ASIC), a software method, etc.) or generic (e.g., processing unit 610, applications 645, etc.) Further, connection to other computing devices such as network input/output devices may be employed.

Some embodiments may employ a computer system (such as the processing system 600) to perform methods in accordance with the disclosure. For example, some or all of the procedures of the described methods may be performed by the processing system 600 in response to processing unit 610 executing one or more sequences of one or more instructions (which might be incorporated into the operating system 640 and/or other code, such as an application program 645) contained in the working memory 635. Such instructions may be read into the working memory 635 from another computer-readable medium, such as one or more of the storage device(s) 625. Merely by way of example, execution of the sequences of instructions contained in the working memory 635 might cause the processing unit 610 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 600, various computer-readable media might be involved in providing instructions/code to processing unit 610 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 625. Volatile media include, without limitation, dynamic memory, such as the working memory 635. Transmission media include, without limitation, coaxial cables, copper wire and fiber optics, including the wires that comprise the bus 605, as well as the various components of the communication interface 630 (and/or the media by which the communication interface 630 provides communication with other devices). Hence, transmission media can also take the form of waves (including without limitation radio, acoustic and/or light waves, such as those generated during radio-wave and infrared data communications).

Common forms of physical and/or tangible computer-readable media include, for example, a magnetic medium, optical medium, or any other physical medium with patterns of holes, a RAM, a PROM, EPROM, a FLASH-EPROM, any other memory chip or cartridge, a carrier wave as described hereinafter, or any other medium from which a computer can read instructions and/or code.

The communication interface 630 (and/or components thereof) generally will receive the signals, and the bus 805 then might carry the signals (and/or the data, instructions, etc. carried by the signals) to the working memory 635, from which the processor(s) 805 retrieves and executes the instructions. The instructions received by the working memory 635 may optionally be stored on a non-transitory storage device 625 either before or after execution by the processing unit 610. Additionally, a power module 650 may provide a power bus or other interface to supply power to the various components.

The methods, systems, and devices discussed above are examples. Some embodiments were described as processes depicted as flow diagrams or block diagrams. Although each may describe the operations as a sequential process, many of the operations can be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

A number of variations and modifications of the disclosed embodiments can also be used. Specific details are given in the above description to provide a thorough understanding of the embodiments. However, it is understood that the embodiments may be practiced without these specific details. For example, well-known circuits, processes, algorithms, structures, and techniques may be shown without unnecessary detail in order to avoid obscuring the embodiments. It is also the case that modules, software, or algorithms can be performed on one server, multiple servers or share the same server. A platform is a major piece of software, such as an operating system, an operating environment, or a relational database or data store, under with various smaller application programs can be designed to run. An operating system is the most important software program running on most computer systems. It manages a processors memory, processes, all of the software and programs loaded onto it, and all of the connected hardware. The operating system's job is to manage all of the software and hardware on the computer. Most of the time, there are many different software programs operating at once as well as multiple connected hardware devices. There are many operating systems - the most basic is the disk operating system or "DOS." Each type of computer or device typically has its own different operating systems. Some typical operating systems are iOS, Windows, Android, and Linux.

The networks disclosed may be implemented in any number of topologies. A network is made of many computing devices that can include computers, servers, mainframe computers, network devices, peripherals, or other devise connected together. A network allows these devices to share data and communicate with each other. The most prominent network is the Internet - that connects billions of devices all over the world. There are many types of network devices including: computers, consoles, firewalls, hubs, routers, smartphones, switches, wearables, watches, and cameras. Networks are set up in many different ways referred to as network topologies. Some of the most common topologies include tree, hybrid, ring, mesh star, and bus. The tree topology is the generally used topology. A computer is typically an electronic device for storing and processing data according to instruction it reads. A console is a text entry and display device. A firewall is network security system, either hardware- or software-based, that controls incoming and outgoing network traffic based on a set of rules, and acts as a barrier between a trusted network and other untrusted networks -- such as the Internet-- or less-trusted networks - a firewall controls access to the resources of a network through a positive control model. This means that the only traffic allowed onto the network defined in the firewall policy is; all other traffic is denied. A hub is a connection point for multiple devices in a network. A hub typically has multiple ports such that if packets of data arrive at one port they are copied to the other ports. A router is a device that forwards data packets along the network. A router connects two or more networks such as an intranet to the internet. Routers use headers and forwarding tables to determine how data packets should be sent using certain paths in the network. The typical router protocol using ICMP to communicate and configure the best path. A network switch is different from a router. Switches serve as controllers that enable networked devices to communicate with each other. Switches create networks while routers connect networks together.

Networks operate on the seven layer open system interconnection (OSI) model. The OSI model defines a conceptual networking framework to implement protocols and divides the task of networking into a vertical stack of the seven layers. In the OSI model, communication control is passed through the layers from the first to the seventh layer. The first or "top" layer is the "physical" layer. Layer 1 transmits the bit stream of ones and zeros indicated by electrical impulse, light, or radio frequency signals - thus providing a method of interacting with actual hardware in a meaningful way. Examples of the physical layer include Ethernet, FDDI, B8ZS, V.35, V.24,and RJ45. The second layer is called the Data Link layer. At layer 2 data packets are encoded and decoded into a bit stream in compliance with transmission protocols that control flow control and frame synchronization. The Data Link layer 2 is actually a combination of two different layers: the Media Access Control (MAC) layer and the Logical Link Control (LLC) layer. The MAC layer controls a computer's access to the network. The LLC basically controls frame synchronization, flow control, and various types of error correction. Examples of the Data Link layer include PPP, FDDI, ATM, IEEE 802.5/802.2, IEEE 802.3/802.2, HDLC, and Frame Relay. The third OSI layer, called the "Network" layer, provides the switching and routing technology to create logical paths to transmit data from one node to another in the network. Layer. The Network layer also performs the function of routing, forwarding, addressing, internetworking, error handling, congestion control, and packet sequencing. Layer 3 examples include AppleTalk, DDP, IP, and IPX. The fourth OSI layer is the Transport layer. Layer 4 provides transparent transfer of data between devices. Layer 4 also performs error recovery and provides flow control for complete data transfer. Examples of layer 4 include SPX, TCP, and UDP. OSI layer 5 called the Session layer because it manages and terminates the connections between different applications. The Session layer coordinates communication between applications. It sets up communications and terminates the communications between applications at each end - establishing and ending a "session." Examples include NFS, NetBios, names, RPC, and SQL. Layer 6 is called the Presentation Layer. Layer 6 is really the "transformation" layer - transforming data from the final layer to a format the network understands and vice versa. Layer 6 formats and encrypts data sent on the network and decrypts the data from the network. Examples include ASCII, EBCDIC, TIFF, GIF, PICT, JPEG, MPEG, and MIDI. Finally, the last layer 7, is called the Application Layer. Everything at this layer is specific to applications, and this layer provides the services for email, file transfers, and other network applications. Examples include WWW browsers, NFS, SNMP, FTP, Telnet, and HTTP.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), complex instruction set computers (CISCs), reduced instruction set computers (RISCs), advanced RISC machines (ARMs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof. A processor is implemented in logic circuitry that includes the basic functions of AND, NAND, OR, and NOR functions. The circuitry responds to the basic instructions that operate an computing device. In some computing devices the processor is actually referred to a as microprocessor. Functionally, processors are typically composed of RAM as well as address and data buses, the processing circuitry and accumulators. The busses supply the data and programming instructions from RAM, ROM, CACHE, or other memory to the processing circuitry. The speed of a processor depends both on the speed of the processing circuitry as well as the speed of the data and address busses that supply the circuitry. And the speed of the data and address buses are also gated by the speed of the RAM. It is critical that all of these components have speeds that are matched to one another to maximize processor performance. Processors use machine level instruction codes to manipulate data. Other instructions must be compiled to machine level instructions to for the processor to perform the operations. Dual core processors have dual processing circuitry and multiple address and data buses.

Also, it is noted that the embodiments may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks may be stored in a machine readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more memories for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, and/or various other storage mediums capable of storing that contain or carry instruction(s) and/or data. Cache memory, also called the central processing unit (CPU) memory, is random access memory that the processor can access more quickly than standard RAM. Cache memory is typically integrated into the circuitry with the processing unit, but sometimes can be placed on a separate chip. The principle purpose of cache memory is to store the program instruction for the operational software such as an operating systems. Most long running software instructions reside in cache memory if they are accessed often.

While the principles of the disclosure have been described above in connection with specific apparatuses and methods, it is to be clearly understood that this description is made only by way of example and not as limitation on the scope of the disclosure.

## Claims

1. A display device (100) for fare collection having integrated barcode scanning comprising:
a display (160) configured to display dynamic messages;
a first glass layer (110) displaced from the display;
a transreflective glass layer (130) positioned between the first glass layer and the display, and displaced from the first glass layer;
a scanner (140) positioned such that it:
emits light rays reflected by the transreflective glass layer (130) through the first glass layer (110); and
detects light rays reflected by the transreflective glass layer (130) from the first class layer (110); and
a processor (600) capable of decoding a barcode scanned by the scanner to determine a proper fare.

2. The display device (100) for fare collection having integrated barcode scanning capability of claim 1, further comprising:
a reflector (120) angled from the first glass layer (110) to the transreflective glass layer (130) capable of reflecting light from the scanner (140) to the transreflective glass layer (130).

3. The display device (100) for fare collection having integrated barcode scanning capability of claim 1 or claim 2, wherein the first glass layer (110) further comprises one or more portions allocated for mobile device placement.

4. The display device (100) for fare collection having integrated barcode scanning capability of any of claims 1 to 3,wherein the first glass layer (110) further comprises one or more portions allocated for printed barcode placement.

5. The display device (100) for fare collection having integrated barcode scanning capability of claim 1 or claim 2, further comprising:
a radio frequency identification reader (150); and
the first glass layer (110) further comprising a portion allocated for smartcard placement.

6. The display device (100) for fare collection having integrated barcode scanning capability of claim 2, wherein the reflector (120) is at least one of voltage controlled and concave.

7. The display device (100) for fare collection having integrated barcode scanning capability of any preceding claim, wherein the scanner (140) is an image scanner or an LED scanner.

8. The display device (100) for fare collection having integrated barcode scanning capability of any preceding claim ,wherein the processor (600) is located remote to the display device and connected to the display device by a network.

9. A method (500) of fare collection using a display device having integrated barcode scanning comprising:
displaying (520) a message on the display device to present a fare media;
indicating (520) on a first glass layer of the display device where to present the fare media;
detecting (525,530) the fare media placed on or within a threshold distance of the first glass layer of the display device;
scanning (540,545) the fare media placed on or within a threshold distance of the display device by a scanner placed in position to detect light rays reflected off of a transreflective glass layer displaced from the first glass layer;
decoding (570), using a processor, the fare media barcode;
determining (575) the fare media represents the proper fare; and
indicating (580) that the fare media is proper.

10. The method of fare collection using a display device having integrated barcode scanning of claim 9, further comprising:
detecting (555) a fare media RFID signal; and
decoding (560), using the processor, the fare media RFID signal.

11. The method (500) of fare collection using a display device having integrated barcode scanning of claim 9 or claim 10, wherein the first glass layer further comprises one or more portions allocated for mobile device placement.

12. The method (500) of fare collection using a display device having integrated barcode scanning of any of claims 9 to 11 wherein the first glass layer further comprises one or more portions allocated for printed barcode placement.

13. The method (500) of fare collection using a display device having integrated barcode scanning of any of claims 9 to 12, further comprising a reflector that reflects light rays from the transreflective glass layer to the scanner.

14. The method of fare collection using a display device having integrated barcode scanning of claim 13, wherein the reflector is at least one of voltage controlled and concave.

15. The method of fare collection using a display device having integrated barcode scanning of any of claims 9 to 14, wherein the scanner is an image scanner or an LED scanner, or wherein the processor is located remote to the display device and connected to the display device by a network.

## Patentansprüche

1. Anzeigevorrichtung (100) zur Fahrgelderhebung mit integriertem Barcode-Scannen, umfassend:
Eine Anzeige (160), die ausgelegt ist, dynamische Mitteilungen anzuzeigen;
eine erste Glasschicht (110), die von der Anzeige versetzt ist;
eine transreflektive Glasschicht (130), die zwischen der ersten Glasschicht und der Anzeige positioniert und von der ersten Glasschicht versetzt ist;
einen Scanner (140), der derartig positioniert ist, dass er:
Lichtstrahlen emittiert, die von der transreflektiven Glasschicht (130) durch die erste Glasschicht (110) reflektiert werden; und
Lichtstrahlen detektiert, die durch die transreflektive Glasschicht (130) von der ersten Glasschicht (110) reflektiert werden; und
einen Prozessor (600), der fähig ist, einen vom Scanner gescannten Barcode zu decodieren, um ein korrektes Fahrgeld zu ermitteln.

2. Anzeigevorrichtung (100) zur Fahrgelderhebung mit integrierter Fähigkeit für Barcode-Scannen nach Anspruch 1, ferner umfassend:
Einen Reflektor (120), der von der ersten Glasschicht (110) zur transreflektiven Glasschicht (130) abgewinkelt ist, der fähig ist, Licht vom Scanner (140) zur transreflektiven Glasschicht (130) zu reflektieren.

3. Anzeigevorrichtung (100) zur Fahrgelderhebung mit integrierter Fähigkeit für Barcode-Scannen nach Anspruch 1 oder Anspruch 2, wobei die erste Glasschicht (110) ferner einen oder mehrere Abschnitte umfasst, die zur Platzierung von Mobilgerät vorgesehen sind.

4. Anzeigevorrichtung (100) zur Fahrgelderhebung mit integrierter Fähigkeit für Barcode-Scannen nach einem der Ansprüche 1 bis 3, wobei die erste Glasschicht (110) ferner einen oder mehrere Abschnitte umfasst, die zur Platzierung von gedrucktem Barcode vorgesehen sind.

5. Anzeigevorrichtung (100) zur Fahrgelderhebung mit integrierter Fähigkeit für Barcode-Scannen nach Anspruch 1 oder Anspruch 2, ferner umfassend:
Ein Lesegerät (150) zur Funkfrequenzerkennung; und
wobei die erste Glasschicht (110) ferner einen Abschnitt umfasst, der zur Platzierung von Smartcards vorgesehen ist.

6. Anzeigevorrichtung (100) zur Fahrgelderhebung mit integrierter Fähigkeit für Barcode-Scannen nach Anspruch 2, wobei der Reflektor (120) zumindest spannungsgeregelt und konkav ist.

7. Anzeigevorrichtung (100) zur Fahrgelderhebung mit integrierter Fähigkeit für Barcode-Scannen irgendeinem vorhergehenden Anspruch, wobei der Scanner (140) ein Bildscanner oder ein LED-Scanner ist.

8. Anzeigevorrichtung (100) zur Fahrgelderhebung mit integrierter Fähigkeit für Barcode-Scannen nach irgendeinem vorhergehenden Anspruch, wobei Prozessor (600) fern der Anzeigevorrichtung positioniert und durch ein Netzwerk mit der Anzeigevorrichtung verbunden ist.

9. Verfahren (500) zur Fahrgelderhebung unter Verwendung einer Anzeigevorrichtung mit integriertem Barcode-Scannen, umfassend:
Anzeigen (520) einer Mitteilung auf der Anzeigevorrichtung, um ein Fahrgeldmedium zu präsentieren;
Zeigen (520) auf einer ersten Glasschicht der Anzeigevorrichtung, wo die Fahrgeldmedien zu präsentieren sind;
Detektieren (525, 530) der Fahrgeldmedien, die auf die oder innerhalb eines Schwellenwertabstands von der ersten Glasschicht der Anzeigevorrichtung platziert wurden;
Scannen (540, 545) der Fahrgeldmedien, die auf oder innerhalb eines Schwellwertabstands der Anzeigevorrichtung von einem in Position platzierten Scanner platziert wurden, um Lichtstrahlen zu detektieren, die ab einer transreflektiven Glasschicht reflektiert wurden, von der ersten Glasschicht versetzt ist;
Decodieren (570), unter Verwendung eines Prozessors, der Fahrgeldmedien-Barcodes;
Ermitteln (575), dass die Fahrgeldmedien das korrekte Fahrgeld repräsentieren;
und Anzeigen (580), dass die Fahrgeldmedien korrekt sind.

10. Verfahren zur Fahrgelderhebung unter Verwendung einer Anzeigevorrichtung mit integriertem Barcode-Scannen nach Anspruch 9, ferner umfassend:
Detektieren (555) eines Fahrgeldmedien-Funkerkennungssignals; und
Decodieren (560), unter Verwendung des Prozessors, des Fahrgeldmedien-Funkerkennungssignal s;

11. Verfahren (500) zur Fahrgelderhebung unter Verwendung einer Anzeigevorrichtung mit integriertem Barcode-Scannen nach Anspruch 9 oder Anspruch 10, wobei die erste Glasschicht ferner einen oder mehrere Abschnitte umfasst, die zur Platzierung von Mobilgeräten vorgesehen sind.

12. Verfahren (500) zur Fahrgelderhebung unter Verwendung einer Anzeigevorrichtung mit integriertem Barcode-Scannen nach irgendeinem der Ansprüche 9 bis 11, wobei die erste Glasschicht ferner einen oder mehrere Abschnitte umfasst, die zur Platzierung von gedrucktem Barcode vorgesehen sind.

13. Verfahren (500) zur Fahrgelderhebung unter Verwendung einer Anzeigevorrichtung mit integriertem Barcode-Scannen nach irgendeinem der Ansprüche 9 bis 12, die ferner einen Reflektor umfasst, der Lichtstrahlen von der transreflektiven Glasschicht zum Scanner reflektiert.

14. Verfahren zur Fahrgelderhebung unter Verwendung einer Anzeigevorrichtung mit integriertem Barcode-Scannen nach Anspruch 13, wobei der Reflektor zumindest spannungsgeregelt und konkav ist.

15. Verfahren zur Fahrgelderhebung unter Verwendung einer Anzeigevorrichtung mit integriertem Barcode-Scannen nach irgendeinem der Ansprüche 9 bis 14, wobei der Scanner ein Bildscanner oder ein LED-Scanner ist, oder wobei sich der Prozessor fern der Anzeigevorrichtung befindet und durch ein Netzwerk mit der Anzeigevorrichtung verbunden ist.

## Revendications

1. Dispositif d'affichage (100) pour la perception de titres de transport à balayage de code à barres intégré comprenant :
un écran (160) configuré pour afficher des messages dynamiques ;
une première couche de verre (110) espacée de l'écran ;
une couche de verre transréflective (130) placée entre la première couche de verre et l'écran, et espacée de la première couche de verre ;
un scanneur (140) positionné de manière générale pour :
émettre des rayons lumineux réfléchis par la couche de verre transréflective (130) à travers la première couche de verre (110) ; et
détecter des rayons lumineux réfléchis par la couche de verre transréflective (130) à partir de la première couche de verre (110) ; et
un processeur (600) capable de décoder un code à barres balayé par le scanneur pour déterminer un titre de transport correct.

2. Dispositif d'affichage (100) pour la perception de titres de transport à capabilité intégrée de balayage de code à barres selon la revendication 1, comprenant en outre :
un réflecteur (120) incliné par rapport à la première couche de verre (110) vers la couche de verre transréflective (130) capable de réfléchir la lumière provenant du scanneur (140) vers la couche de verre transréflective (130).

3. Dispositif d'affichage (100) pour la perception de titres de transport à capabilité intégrée de balayage de code à barres selon la revendication 1 ou la revendication 2, dans lequel la première couche de verre (110) comprend en outre une ou plusieurs parties destinées au placement d'un dispositif mobile.

4. Dispositif d'affichage (100) pour la perception de titres de transport à capabilité intégrée de balayage de code à barres selon l'une quelconque des revendications 1 à 3, dans lequel la première couche de verre (110) comprend en outre une ou plusieurs parties destinées au placement d'un code à barres imprimé.

5. Dispositif d'affichage (100) pour la perception de titres de transport à capabilité intégrée de balayage de code à barres selon la revendication 1 ou la revendication 2, comprenant en outre :
un lecteur d'identification par radiofréquence (150) ; et
la première couche de verre (110) comprenant en outre une partie destinée au placement d'une carte à puce.

6. Dispositif d'affichage (100) pour la perception de titres de transport à capabilité intégrée de balayage de code à barres selon la revendication 2, dans lequel le réflecteur (120) est au moins commandé en tension et concave.

7. Dispositif d'affichage (100) pour la perception de titres de transport à capabilité intégrée de balayage de code à barres selon n'importe quelle revendication précédente, dans lequel le scanneur (140) est un scanneur d'images ou un scanneur à DEL.

8. Dispositif d'affichage (100) pour la perception de titres de transport à capabilité intégrée de balayage de code à barres selon n'importe quelle revendication précédente, dans lequel le processeur (600) est situé à distance du dispositif d'affichage et connecté au dispositif d'affichage par un réseau.

9. Procédé (500) de perception de titres de transport au moyen d'un dispositif d'affichage à balayage de code à barres intégré comprenant :
l'affichage (520) d'un message sur le dispositif d'affichage pour présenter un support de titre de transport ;
l'indication (520) sur une première couche de verre du dispositif d'affichage de l'endroit où présenter le support de titre de transport ;
la détection (525,530) du support de titre de transport placé sur le dispositif d'affichage ou en-deçà d'une distance limite de la première couche de verre du dispositif d'affichage ;
le balayage (540 545) du support de titre de transport placé sur le dispositif d'affichage ou en-deçà d'une distance limite du dispositif d'affichage par un scanneur positionné pour détecter des rayons lumineux réfléchis par une couche de verre transréflective espacée de la première couche de verre ;
le décodage (570), au moyen d'un processeur, du code à barres du support de titre de transport ;
la détermination (575) que le support de titre de transport représente le titre de transport correct ; et
l'indication (580) que le support de titre de transport est correct.

10. Procédé d'encaissement de titre de transports au moyen d'un dispositif d'affichage à balayage de code à barres intégré selon la revendication 9, comprenant en outre :
la détection (555) d'un signal RFID de support de titre de transport ; et
le décodage (560), au moyen du processeur, du signal RFID de support de titre de transport.

11. Procédé (500) d'encaissement de titre de transports au moyen d'un dispositif d'affichage à balayage de code à barres intégré selon la revendication 9 ou la revendication 10, dans lequel la première couche de verre comprend en outre une ou plusieurs parties destinées au placement d'un dispositif mobile.

12. Procédé (500) d'encaissement de titre de transports au moyen d'un dispositif d'affichage à balayage de code à barres intégré selon l'une quelconque des revendications 9 à 11 dans lequel la première couche de verre comprend en outre une ou plusieurs parties destinées au placement d'un code à barres imprimé.

13. Procédé (500) d'encaissement de titre de transports au moyen d'un dispositif d'affichage à balayage de code à barres intégré selon l'une quelconque des revendications 9 à 12, comprenant en outre un réflecteur qui réfléchit les rayons de lumière depuis la couche de verre transréflective vers le scanneur.

14. Procédé d'encaissement de titre de transports au moyen d'un dispositif d'affichage à balayage de code à barres intégré selon la revendication 13 dans lequel le réflecteur est au moins commandé en tension et concave.

15. Procédé d'encaissement de titre de transports au moyen d'un dispositif d'affichage à balayage de code à barres intégré selon l'une quelconque des revendications 9 à 14, dans lequel le scanneur est un scanneur d'images ou un scanneur à DEL, ou dans lequel le processeur est situé à distance du dispositif d'affichage et connecté au dispositif d'affichage par un réseau.
